(19) Europäisches Patentamt
European Patent Office
Office européen des brevets

(11) **EP 0 654 367 B1**

(12) **EUROPÄISCHE PATENTSCHRIFT**

(45) Veröffentlichungstag und Bekanntmachung des Hinweises auf die Patenterteilung:
**11.11.1998 Patentblatt 1998/46**

(51) Int. Cl.$^6$: **B60G 17/015**

(21) Anmeldenummer: **94112517.1**

(22) Anmeldetag: **10.08.1994**

(54) **Vorrichtung zur Niveauregelung eines Fahrzeugs mit Luftfederung**

Height adjustment system for a vehicle with air suspension

Système de réglage de hauteur d'un véhicule à suspension pneumatique

(84) Benannte Vertragsstaaten:
**DE FR GB IT SE**

(30) Priorität: **04.10.1993 DE 4333823**

(43) Veröffentlichungstag der Anmeldung:
**24.05.1995 Patentblatt 1995/21**

(73) Patentinhaber: **ROBERT BOSCH GMBH**
**70442 Stuttgart (DE)**

(72) Erfinder:
• **Karthäuser, Klaus, Dipl.-Ing.**
**D-70469 Stuttgart (DE)**
• **Werner, Frank, Dipl.-Ing.**
**D-71254 Ditzingen (DE)**

(56) Entgegenhaltungen:
**WO-A-89/09701**　　　　**US-A- 5 159 554**

**Beschreibung**

Die Erfindung betrifft eine Vorrichtung zur Niveauregelung eines Fahrzeugs mit Luftfederung, insbesondere eines Nutzfahrzeugs.

Stand der Technik

Bei Fahrzeugen mit Luftfederung, insbesondere bei Nutzfahrzeugen, kommt es vor, daß das Fahrzeugniveau zu einem vom Fahrer festgelegten Zeitpunkt oder beim plötzlichen Auftreten neuer Betriebsbedinungen, z. B. einer stark holperigen Fahrbahn, das Fahrzeugniveau vom Istniveau auf ein neues Sollniveau verändert werden soll. Andere Beispiele für solche plötzlich angeforderten Änderungen sind Absenken zum Unterfahren einer Brücke oder Anheben zum Auffahren auf eine Fähre oder ein Transportfahrzeug unter Nutzung eines großen Bodenabstands.

Bei der Niveauverstellung besteht das Erfordernis, die Verstellung so genau und schnell wie möglich vorzunehmen. Zur schnellen Verstellung werden elektromagnetisch gesteuerte Wegeventile mit großem Querschnitt verwendet. Dies erschwert es, ein Sollniveau genau einzustellen. Eine weitere Schwierigkeit rührt daher, daß sich Luft stark elastisch verhält, was zur Folge hat, daß mit dem Schließen eines Wegeventils die Niveauverstellung nicht sofort endet, sondern daß ein Nachverstellen erfolgt.

Um mit diesen Schwierigkeiten fertigzuwerden, existieren zwei bekannte Lösungen.

Bei bekannten Vorrichtungen der ersten Art wird das Sollniveau nicht in einem Arbeitsgang eingestellt, sondern bei Erreichen einer vorgegebenen Differenz zwischen dem aktuellen Niveau und dem Sollniveau werden die Ventile abgeschaltet, um danach das Sollniveau mit Hilfe kurzer Öffnungstakte der Ventile anzufahren. Dies erzeugt jedoch lästige Geräusche.

Bei einer Vorrichtung gemäß der zweiten Art werden die Ventile abhängig von der während der Verstellung gemessenen Verstellgeschwindigkeit bereits vor Erreichen des Sollniveaus abgeschaltet, und das Sollniveau wird nach dem Ausschwingvorgang erreicht. Vorteilhaft bei dieser Vorrichtung sind fehlende Geräuschbelastung und ein vom Prinzip her schnelles Einstellen, wobei der letzte Vorteil wieder dadurch zunichte gemacht wird, daß die Öffnungsquerschnitte der Ventile nur so groß bemessen sein dürfen, daß immer mit einem Verstellzeitraum gerechnet werden kann, innerhalb dessen sich die Verstellgeschwindigkeit noch messen läßt, ohne daß bereits das Sollniveau überfahren ist. Nachteilig ist weiterhin, daß die Abhängigkeit des vorverlegten Abschaltzeitpunkts von der Verstellgeschwindigkeit für jeden Fahrzeugtyp gesondert appliziert werden muß.

Eine Lösung zur Beseitigung dieses Nachteils zeigt die WO-A-89/09701 eine Niveauregelanlage, bei der nach einem Niveau-Regelvorgang bei einer hinreichend großen Abweichung zwischen dem Soll- und Istniveau eine Korrektur der vorbekannten Kennlinie (Abschaltzeitpunkt in Abhängigkeit von der gemessenen Verstellgeschwindigkeit) vorgenommen wird. Diese Korrektur geschieht abhängig von der Abweichung zwischen dem Soll- und Istniveau derart, daß die Abweichung zwischen dem Soll- und Istniveau nach dem nächsten Niveauregelzyklus reduziert wird.

Darstellung der Erfindung

Der Erfindung liegt die Aufgabe zugrunde, eine Vorrichtung zur Niveauregelung eines Fahrzeugs mit Luftfederung anzugeben, die schnell, genau und ohne Geräuschbelästigung durch häufiges Öffnen und Schließen von Ventilen arbeitet.

Die Erfindung ist durch die Lehren der beiden unabhängigen Ansprüche 1 bzw. 2 gegeben. Beide Vorrichtungen basieren auf der vorstehend genannten Vorrichtung der zweiten Art, und es ist ihnen gemeinsam, daß sie diese Vorrichtung so weiterbilden, daß der Schließzeitpunkt für das jeweils angesteuerte Ventil genauer festgelegt wird.

Bei der Vorrichtung gemäß Anspruch 1 erfolgt dieses genauere Festlegen dadurch, daß der oben genannte Zusammenhang zwischen dem vorzeitigen Schließen des Ventils und der Verstellgeschwindigkeit abhängig vom Verstellergebnis korrigiert wird. D. h., daß dann, wenn im Ausschwingvorgang nach dem vorzeitigen Abschalten nicht das erwünschte Sollniveau erreicht wird, abgeschätzt wird, wie der vorgezogene Schließzeitpunkt hätte gewählt werden müssen, um wahrscheinlich das Sollniveau zu erzielen. Dieser neu abgeschätzte Wert wird zukünftig beim genannten Zusammenhang verwendet.

Bei der Vorrichtung gemäß Anspruch 2 erfolgt die genauere Festlegung des Abschaltzeitpunkts dadurch, daß schon vor dem Öffnen eines Ventils untersucht wird, ob die Differenz zwischen dem Istniveau und dem Sollniveau unter einem kritischen Wert liegt. Ist dies der Fall, wird aus einem vorbekannten Zusammenhang zwischen der Differenz und der Öffnungszeitspanne eines Ventils diejenige Öffnungszeitspanne bestimmt, die im Fall der aktuellen Differenz zu verwenden ist. Dadurch kann der Schließzeitpunkt auch dann genau festgelegt werden, wenn wegen einer sehr kleinen Differenz nicht ausreichend Zeit zur Verfügung steht, um zuverlässig die Verstellgeschwindigkeit zu ermitteln. Ist die Differenz dagegen größer als die kritische Vergleichsdifferenz, wird wie bei der eingangs beschriebenen Vorrichtung der zweiten Art oder wie bei der Vorrichtung gemäß Anspruch 1 vorgegangen.

Auch bei der Vorrichtung gemäß Anspruch 2 ist es von Vorteil, ähnlich wie bei der gemäß Anspruch 1, durch Vergleich zwischen der vorgegebenen und dem tatsächlich erzielten Sollniveau zu untersuchen, ob die zur zu überwindenden Differenz gehörige Öffnungszeitspanne durch den vorgegebenen Zusammenhang richtig wiedergegeben wurde. Ist dies nicht der Fall, wird der vorgegebene Zusammenhang so korrigiert, daß beim nächsten Mal das Sollniveau zutreffend erzielt werden sollte.

Von Vorteil ist es, wenn die vorstehend genannten Zusammenhänge und Vergleichsgröße berücksichtigen, daß die dynamischen Verhältnisse für Heben und Senken unterschiedlich sind. Ob ein Heben auszuführen ist und demgemäß die dazugehörigen Zusammenhänge und Vergleichswerte zu verwenden sind, läßt sich daran erkennen, daß das Sollniveau großer ist als das Istniveau. Entsprechend wird eine Absenkanforderung dadurch erkannt, daß das Sollniveau kleiner ist als das Istniveau.

Zeichnung

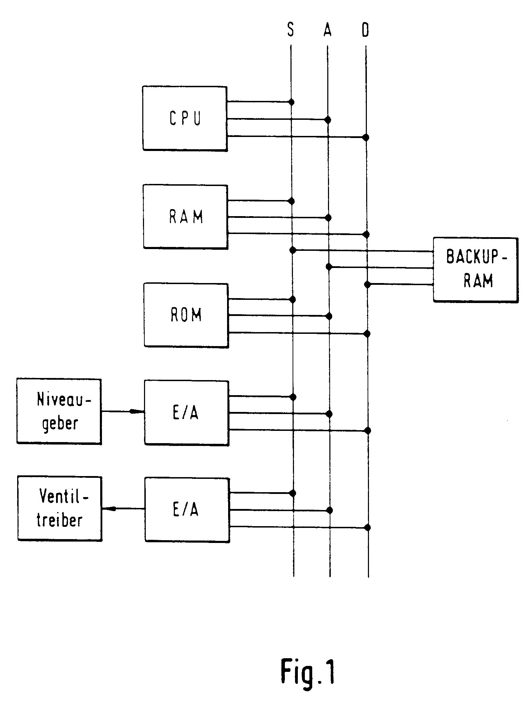

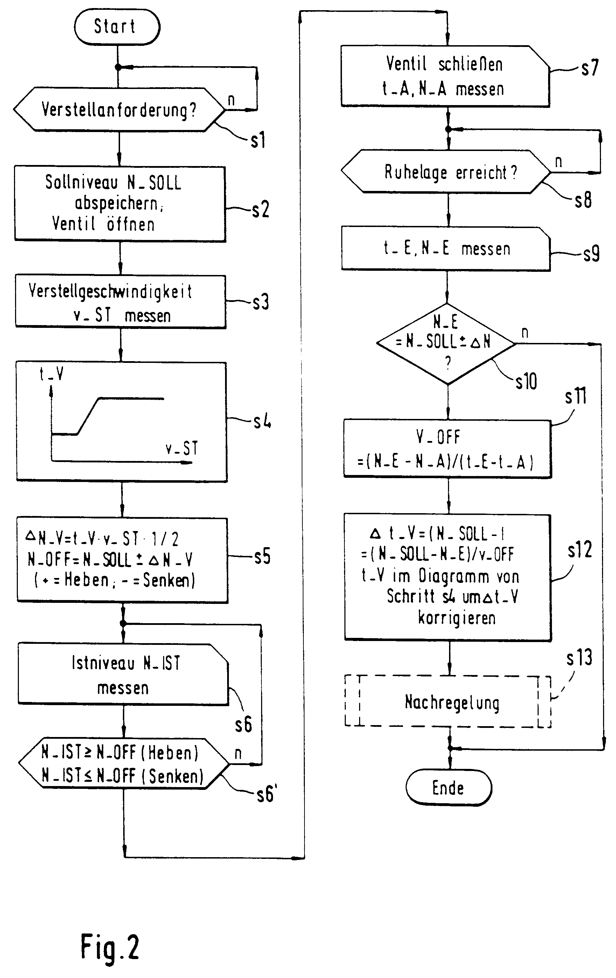

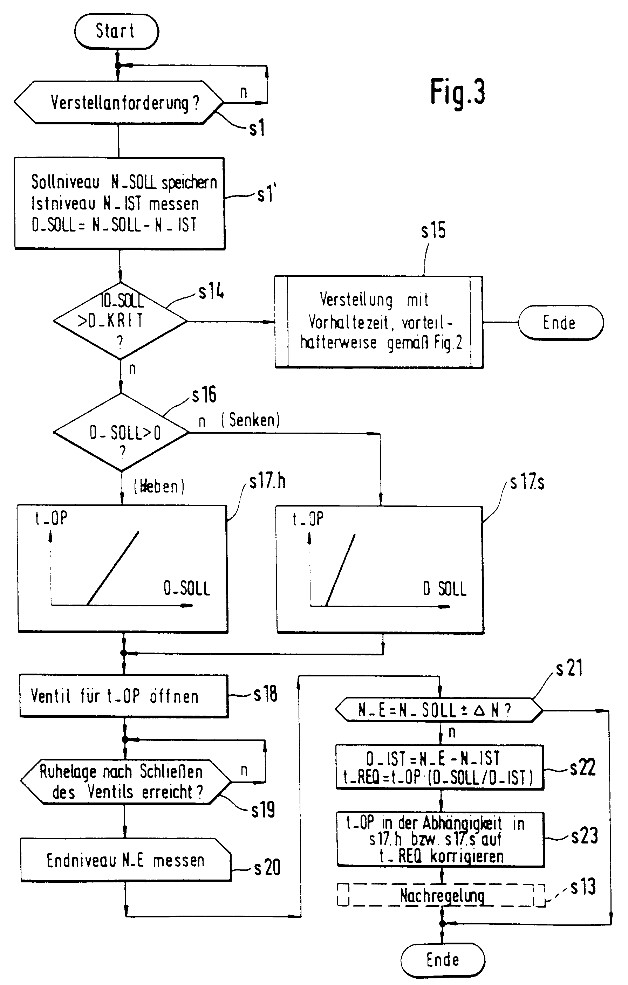

Fig. 1: Blockfunktionsdiagramm einer Vorrichtung zur Niveauregelung eines Fahrzeugs mit Luftfederung; Fig. 2: Flußdiagramm zum Erläutern der Funktion einer ersten Vorrichtung zur Niveauregelung; und Fig. 3: Flußdiagramm zum Erläutern der Funktion einer zweiten Vorrichtung zur Niveauregelung.

Beschreibung von Ausführungsbeispielen

Wie eine herkömmliche Vorrichtung zur Niveauregelung eines Fahrzeugs mit Luftfederung weist die erfindungsgemäße Vorrichtung eine CPU, einen RAM, einen ROM und verschiedenen E/A-Schnittstellen auf, um Daten zur Niveaumessung anzunehmen oder Signale an einen Ventiltreiber auszugeben. Die CPU, der RAM, der ROM und die E/A-Schnittstellen sind über einen Signalbus S, einen Adreßbus A und einen Datenbus D miteinander verbunden.

Zusätzlich zur bekannten Vorrichtung zur Niveauregelung weist die erfindungsgemäße Vorrichtung noch einen Backup-RAM auf, in dem Zusammenhänge zwischen verschiedenen Größen in Kennfeldform so abgelegt sind, daß die Zusammenhänge verändert werden können. Bei bekannten Vorrichtungen war eine solche Veränderung nicht möglich, weswegen die Zusammenhänge fest im ROM abgespeichert waren zusammen mit einem Programm, das der Vorrichtung eine jeweilige Funktion verleiht. Auch bei der erfindungsgemäßen Vorrichtung ist im ROM ein derartiges funktionsvermittelndes Programm gespeichert. Gemäß den Ausführungsbeispielen handelt es sich entweder um ein Programm, das der Vorrichtung die Funktion gemäß dem Ablauf von Fig. 2 oder die Funktion gemäß dem Ablauf von Fig. 3 verleiht.

Wenn die Vorrichtung von Fig. 1 die Funktion gemäß Fig. 2 aufweist, überprüft sie nach dem Start ihres Betriebs, ob eine Verstellanforderung vorliegt (Schritt s1). Sobald dies der Fall ist, wird der Wert N_SOLL für das angeforderte Sollniveau abgespeichert, und an jeder Radaufhängig wird ein Ventil zum Einstellen des Sollniveaus geöffnet (Schritt s2).

Im folgenden wird der Einfachheit halber immer nur von einem einzigen Ventil gesprochen. Es ist jedoch zu beachten, daß an jeder Radaufhängung eine Ventilanordnung vorhanden ist, die entweder über zwei Ventile zum Heben bzw. zum Senken oder über ein Mehrwegeventil verfügt. "Ventil öffnen" oder "Ventil schließen" in dieser Beschreibung bedeutet also jeweils, daß an jeder Aufhängung das zur erwünschten Bewegungn (Heben oder Senken) gehörende Ventil geöffnet wird oder es im Fall eines Ventils mit mehreren Stellungen diejenige Stellung einnimmt, in der der Weg zum Erzielen der gewünschten Bewegungsrichtung geöffnet ist.

Nachdem das Ventil geöffnet ist, wird die Verstellgeschwindigkeit v_ST des Niveaus gemessen (Schritt s3). Diese Messung wird entweder leicht verzögert nach dem Öffnungszeitpunkt vorgenommen, um den Anlaufzeitraum bei der Messung auszuschließen, oder es wird eine fortlaufende Mittelung vorgenommen, in der die zuletzt geltenden Werte dominieren. Sobald die Verstellgeschwindigkeit festgestellt ist, was so schnell wie möglich erfolgt, wird aus einem vorgegebenen Zusammenhang zwischen der Verstellgeschwindigkeit und einer Vorhaltezeit t_V der aktuelle Wert der Vorhaltezeit bestimmt (Schritt s4). Mit den aktuellen Werten für die Verstellgeschwindigkeit v_ST und der Vorhaltezeit t_V kann eine Vorhalte-Niveaudifferenz $\Delta$N_V gemäß t_V $\cdot$ v_ST $\cdot$ 1/2 abgeschätzt werden. "1/2" ist dabei ein Gewichtungsfaktor G, der ausdrückt, wie die mittlere Verstellgeschwindigkeit im Zeitraum zwischen dem Schließen des Ventils und dem Erreichen des Ruheniveaus von der Verstellgeschwindigkeit v_ST zum Zeitpunkt des Schließens des Ventils abhängt. Bei der Wahl des Gewichtungsfaktors "1/2" ist angenommen, daß sich die Geschwindigkeit in etwa linear von der Anfangsgeschwindigkeit v_ST zur Geschwindigkeit 0 beim Vorliegen des Ruheniveaus ändert. Mit Hilfe der Vorhalte-Niveaudifferenz kann das Abschaltniveau N_OFF zu N_SOLL$\pm\Delta$N_V bestimmt werden, zu dem das Ventil vor Erreichen des Sollniveaus zu schließen ist. Das Vorzeichen "-" gilt dabei für einen Hebevorgang, während das Vorzeichen "+" für einen Senkvorgang gilt (Schritt s5).

Im Block zum Schritt s4 ist in Fig. 2 ein Diagramm für den Zusammenhang zwischen der Verstellgeschwindigkeit v_ST und der Vorhaltezeit t_V dargestellt. Es ist erkennbar, daß bei kleinen Verstellgeschwindigkeiten von z. B. 5 mm/sec eine kurze Vorhaltezeit von z. B. 0,5 sec gilt. Bei hohen Verstellgeschwindigkeiten ab etwa 20 mm/sec gilt eine konstante Vorhaltezeit von 1,5 sec. Zwischen den genannten Punkten besteht ein linearer Zusammenhang zwischen den beiden Größen.

Nachdem im Schritt s5 das Abschaltniveau N_OFF bestimmt wurde, wird überprüft, ob das in einem Schritt s6 gemessene Istniveau N_IST bereits das Abschaltniveau erreicht hat (schritt s6'). Sobald dies der Fall ist, wird das Ventil geschlossen, und es werden ein Anfangszeitpunkt t_A und ein Anfangsniveau N_A gemessen (Schritt s7). Nach dem Schließen des Ventils bewegt sich die verstellte Aufhängung weiter. In einem Schritt s8 wird abgefragt, ob bereits das Ruheniveau erreicht ist. Sobald dies der Fall ist, werden ein Endzeitpunkt t_E und ein Endniveau N_E gemessen (Schritt s9). Danach wird abgefragt, ob das Endniveau N_E innerhalb einer vorgegebenen Grenze ±N von einigen Millimetern mit dem Sollniveau N_SOLL übereinstimmt (Schritt s10). Wenn dies der Fall ist, wird das Ende des Verfahrens erreicht.

Andernfalls wird in einem Schritt s11 aus den Meßwerten zu Anfang und Ende der Bewegung nach dem Schließen des Ventils die mittlere Verstellgeschwindigkeit v_OFF bei geschlossenem Ventil berechnet. Mit Hilfe dieser Geschwindigkeit und der Abweichung zwischen dem Sollniveau und dem tatsächlich erzielten Endniveau kann eine Korrekturvorhaltezeit Δt_V zu (N_SOLL-N_E)/v_OFF berechnet werden, mit der die Vorhaltezeit t_V im Diagramm von Schritt s4 korrigiert wird (Schritt s12). Wahlweise kann dann in einem Schritt s13 das Niveau noch auf beliebige bekannte Weise nachgestellt werden.

Wenn die Vorrichtung gemäß Fig. 1 so ausgebildet, d. h. programmiert ist, daß sie den Funktionsablauf von Fig. 3 ausführt, überprüft sie nach ihrer Inbetriebnahme, ob eine Verstellanforderung vorliegt. Dies entspricht dem Schritt s1 des Ablaufs von Fig. 2, weswegen diese Abfrage auch in Fig. 3 als Schritt s1 bezeichnet ist. Sobald eine Verstellanforderung festgestellt wird, werden das Sollniveau U_SOLL gespeichert, das Istniveau N_IST wird gemessen und aus diesen beiden Niveaus wird eine Solldifferenz D_SOLL = N_SOLL-N_IST berechnet (Schritt s1'). Anschließend wird überprüft, ob der Betrag der Solldifferenz größer ist als eine kritische Differenz D_KRIT (Schritt s14). Ist dies der Fall, wird in einem Unterprogrammschritt s15 entweder die Funktion der herkömmlichen Vorrichtung zweiter Art oder, vorteilhafterweise, die Funktion gemäß dem Flußdiagramm von Fig. 2 ausgeführt. Danach beendet die Vorrichtung den Niveaueinregelungsvorgang.

Ergibt sich im Schritt s14 jedoch, daß der Betrag der Solldifferenz kleiner als die kritische Differenz oder gleich groß ist, wird eine Funktionsfolge ausgeführt, mit der sich trotz der kleinen zu überwindenden Differenz der Schließzeitpunkt für ein Ventil ziemlich genau bestimmen läßt. Hierzu wird zunächst untersucht (Schritt s16), ob Heben oder Senken vorliegt. Abhängig vom Vergleichsergebnis wird entweder ein Schritt s17.h (Heben) oder ein Schritt s17.s (Senken) erreicht. In beiden Fällen wird eine vorbekannte Abhängigkeit zwischen der Solldifferenz D_SOLL und der Ventilöffnungszeit t_OP ausgewertet, die erforderlich ist, um die Solldifferenz D_SOLL zu überwinden. Bis zu einer Solldifferenz von 4 mm wird beim Ausführungsbeispiel eine Ventilöffnungszeit von 0,4 sec, beim Senken von 0,2 sec verwendet. Für das Heben endet der Zusammenhang bei einer Solldifferenz von 25 mm und einer Öffnungszeitspanne von 1 sec, während für das Senken eine Grenze von 15 mm bei 0,7 sec gilt.

Nachdem die Ventilöffnungszeit auf diese Weise bestimmt wurde, wird das Ventil für diese Zeitspanne geöffnet (Schritt s18). Nachdem das Ventil nach seinem Öffnungszustand über diese Zeitspanne wieder geschlossen ist, schwingt die Aufhängung noch aus. In einem Schritt s19 wird untersucht, ob das Ruheniveau nach dem Schließen des Ventils erreicht ist. Sobald dies der Fall ist, wird das erzielte Endniveau N_E gemessen (Schritt s20), und es wird überprüft, ob das Endniveau innerhalb einer vorgegebenen Toleranz ΔN von 2 mm um das Sollniveau liegt (Schritt s21). Ist dies der Fall, beendet die Vorrichtung den Niveauregelungsvorgang.

Andernfalls berechnet sie die erzielte Differenz D_IST zu N_E-N_IST. Aus der erzielten Differenz, der Solldifferenz und der Öffnungszeitspanne läßt sich eine erforderliche Zeitspanne t_REQ zu t_OP · (D_SOLL/D_IST) berechnen, die eigentlich dazu erforderlich gewesen wäre, die Solldifferenz zu überwinden (Schritt s22). Auf diesen Wert t_REQ wird die Öffnungszeitspanne t_OP im Schritt s17.h (Heben) oder im Schritt s17.s (Senken) korrigiert, um beim nächsten Mal, wenn dieselbe Solldifferenz zu überwinden ist, diese Solldifferenz auch tatsächlich zu erzielen. In einem wahlweisen abschließenden Schritt s13 kann noch eine beliebige bekannte Nachregelung erfolgen, falls sich aus irgendeinem Grund trotz der für genaues Einstellen vorgegebenen Funktion eine Abweichung des Endniveaus vom Sollniveau vorliegen sollte, die über einer zulässigen Grenze liegt.

Es sei darauf hingewiesen, daß ein vereinfachtes Ausführungsbeispiel einer erfindungsgemäßen Vorrichtung, die nur die Funktion bis zum Schritt s18 in Fig. 3 ausübt, bereits die der Erfindung zugrunde liegende Augabe löst. Mit Hilfe der in Schritt s17.h oder Schritt s17.s ausgewerteten Abhängigkeit zwischen der Solldifferenz D_SOLL und der Ventilöffnungszeitspanne t_OP kann der Schließzeitpunkt für das Ventil sehr genau bestimmt werden. Jedoch wird bei dieser vereinfachten Ausführungsform keine Korrektur der vorgegebenen Abhängigkeiten abhängig vom tatsächlich erzielten Regelungsergebnis vorgenommen.

Bei den Ausführungsbeispielen sind die in den Schritten s4, s17.h und s17.s ausgewerteten Abhängigkeiten durch Kennlinien gegeben, die im Backup-RAM abgelegt sind. Dies ist von Vorteil, weil dann einzelne Punkte für die jeweilige Abhängigkeit leicht verändert werden können.

Die gegebenen Zahlenbeispiele für die Abhängigkeit von Größen und für vorgegebene Vergleichswerte gelten für einen konkreten Anwendungsfall an einem Nutzfahrzeug mit einem Verstellweg von ± 100 mm und einer maximalen Verstellgeschwindigkeit beim Absenken von 25 mm/sec. Für andere Anwendungsfälle können sich Werte ergeben, die sich stark von denen des Ausführungsbeispiels unterscheiden, abhängig vom jeweiligen Gesamthub, von den jeweils erzielbaren Verstellgeschwindigkeiten und von der gewünschten Regelungstoleranz. Vom Anwendungsfall kann es auch abhängen, ob für Heben und Senken jeweils unterschiedliche Abhängigkeiten und unterschiedliche Vergleichswerte vorgegeben werden sollen. So ist es z. B. dann, wenn sich die maximale Hebegeschwindigkeit und die maximale Senkgeschwindigkeit um ca. 10 % oder mehr voneinander unterscheiden, von Vorteil, für die kritische Differenz D_KRIT in Schritt s14 verschiedene Werte für das Heben und das Senken zu verwenden, und zwar einen kleineren für den langsameren Hebevorgang und einen größeren für den schnelleren Senkvorgang. Zusätzlich können die Werte noch abhängig von der Beladung verändert werden. So findet z. B. das Absenken bei einem stark beladenen Nutzfahrzeug erheblich schneller statt als bei einem entladenen. Im entladenen Zustand kann der Absenkvorgang langsamer erfolgen als der Hebevorgang, während es bei stark beladenem Fahrzeug genau umgekehrt ist.

**Patentansprüche**

1. Vorrichtung zur Niveauregelung eines Fahrzeugs mit Luftfederung, welche Vorrichtung so ausgebildet ist, daß sie dann, wenn eine Einstellung auf ein neues Sollniveau N_SOLL erfolgen soll, die folgenden Schritte hinsichtlich einer Ventilanordnung an einem jeweiligen Rad mit Niveauregelung ausführt:

   a) es wird ein Ventil geöffnet, das Luft aus einer Luftfeder einrichtung läßt oder in diese einbläst, um das Sollniveau ausgehend vom Istniveau N_IST zu erreichen;
   b) es wird die Verstellgeschwindigkeit v_ST der Niveauverstellung gemessen;
   c) aus der gemessenen Verstellgeschwindigkeit wird nach einer vorbekannten Abhängigkeit zwischen der Verstellgeschwindigkeit und einer Vorhaltezeit t_V der aktuelle Wert der Vorhaltezeit bestimmt, und aus diesem wird gemäß der Beziehung $\Delta N\_V = t\_V \cdot v\_ST \cdot G$, wobei G ein Gewichtungsfaktor <1 ist, eine Vorhalte-Niveaudifferenz bestimmt, um die das Ventil verfrüht vor dem Erreichen des Istniveaus geschlossen werden muß, damit sich trotz des Überschwingens der Luftfederung nach dem Schließen des Ventils das Sollniveau einstellen soll; und
   d) das Ventil wird bei Erreichen eines Abschaltniveaus N_OFF = N_SOLL-$\Delta$N_V beim Heben bzw. N_OFF = N_SOLL+$\Delta$N_V beim Senken abgeschaltet;
   e) nach dem Abschalten des Ventils wird eine Endverstellgeschwindigkeit v_OFF bei abgeschaltetem Ventil bestimmt;
   f) sobald die Luftfederung zur Ruhe gekommen ist, wird das Endniveau n_E gemessen und mit dem Sollniveau N_SOLL verglichen;

   g) wenn das Endniveau innerhalb einer vorgegebenen Toleranz $\Delta$N um das Sollniveau liegt, wird das Verfahren beendet, andernfalls schließen sich folgende Schritte an:
   h) aus der Endverstellgeschwindigkeit v_OFF und der Niveauabweichung N_SOLL-N_E wird eine Korrekturvorhaltezeit $\Delta t\_V = (N\_SOLL-N\_E)/v\_OFF$ bestimmt; und
   h') in der vorbekannten Abhängigkeit der Vorhaltezeit t_V von der Verstellgeschwindigkeit v_ST wird der zum aktuellen Wert der Verstellgeschwindigkeit gehörende Wert der Vorhaltezeit um die Korrekturvorhaltezeit $\Delta t\_V$ korrigiert.

2. Vorrichtung zur Niveauregelung eines Fahrzeugs mit Luftfederung, welche Vorrichtung so ausgebildet ist, daß sie dann, wenn eine Einstellung auf ein neues Sollniveau N_SOLL erfolgen soll, die folgenden Schritte hinsichtlich einer Ventilanordnung an einem jeweiligen Rad mit Niveauregelung ausführt:

   a) es wird untersucht, ob die Differenz D_SOLL = N_SOLL-N_IST zwischen dem Istniveau N_IST und dem Sollniveau N_SOLL betragsmäßig über einer kritiscnen Differenz D_KRIT liegt, und dann, wenn dies der Fall ist, führt sie die folgender Schritte b) bis e) aus, während sie andernfalls den Schritt f) ausführt:
   b) es wird ein Ventil geöffnet, das Luft aus einer Luftfedereinrichtung läßt oder in diesen einbläst, um das Sollniveau ausgehend vom Istniveau N_IST zu erreichen;
   c) es wird die Verstellgeschwindigkeit v_ST der Niveauverstellung gemessen;
   d) aus der gemessenen Verstellgeschwindigkeit wird nach einer vorbekannten Abhängigkeit zwischen der Verstellgeschwindigkeit und einer Vorhaltezeit t_V der aktuelle Wert der Vorhaltezeit bestimmt, und aus diesem wird gemäß der Beziehung $\Delta N\_V = t\_V \cdot v\_ST \cdot G$, wobei G ein cewichtungsfaktor <1 ist, eine Vorhalte-Niveaudifferenz bestimmt, um die das Ventil verfrüht vor dem Erreichen des Istniveaus geschlossen werden muß, damit sich trotz des Überschwingens der Luftfederung nach dem Schließen des Ventils das Sollniveau einstellen soll; und
   e) das Ventil wird bei Erreichen eines Abschaltniveaus N_OFF = N_SOLL-$\Delta$N_V beim Heben bzw. N_OFF = N SOLL+$\Delta$N_V beim Senken abgeschaltet;
   f) aus der Differenz D_SOLL wird aus einer vorbekannten Abhängigkeit zwischen dem Sollabstand D_SOLL und einer Ventilöffnungszeit t_OP der aktuelle Wert der Ventilöffnungszeit bestimmt, mit deren Hilfe die Solldifferenz überwunden werden soll, und das zum Einstellen des Sollniveaus zuständige Ventil wird für die aktuell bestimmte Ventilöffnungszeit t_OP geöffnet.

3. Vorrichtung nach Anspruch 2, **dadurch gekennzeichnet,** daß sie so ausgebildet ist, daß sie die folgenden Schritte im Anschluß an Schritt ii) ausführt:

   iii) sobald die Luftfederung nach dem Schließen des Ventils zur Ruhe gekommen ist, wird das erreichte Endniveau N_E gemessen;

   iv) das Endniveau wird mit dem Sollniveau verglichen und dann, wenn das Endniveau innerhalb einer vorgegebenen Toleranz ΔN um das Sollniveau liegt, beendet die Vorrichtung das Regelungsverfahren, während sie andernfalls die folgenden Schritte ausführt:

   v) aus der erzielten Differenz D_IST=N_E-N_IST zwischen dem Endniveau N_E und dem ursprünglichen Istniveau N_IST, der Solldifferenz D_SOLL und der verwendeten Öffnungszeit t_OP wird eine Öffnungszeit t_REQ=t_OP · (D_SOLL/D_IST) bestimmt, die tatsächlich erforderlich gewesen wäre, um die Solldifferenz D_SOLL zu überwinden; und

   vi) in der im Schritt ii) genutzten vorbekannten Abhängigkeit der Öffnungszeit t_OP von der Solldifferenz d_SOLL wird der zum aktuellen Wert von D_SOLL gehörige Wert von t_OP durch den Wert t_REQ ersetzt.

4. Vorrichtung nach einem der Ansprüche 2 oder 3, **dadurch gekennzeichnet,** daß sie so ausgebildet ist, daß sie für den kritischen Abstand D_KRIT im Schritt i) zwei verschiedene Werte verwendet, und zwar ein kleinerer für D_SOLL > 0 (Heben) und ein größerer für D_SOLL < 0 Senken).

5. Vorrichtung nach einem der Ansprüche 2 bis 4, **dadurch gekennzeichnet,** daß die Vorrichtung so ausgebildet ist, daß sie dann, wenn sie im Schritt i) die Entscheidung zum Ausführen der Schritte a) bis d) fällt, nicht nur diese Schritte, sondern auch noch die Schritte e) bis h') von Anspruch 1 ausführt.

6. Vorrichtung nach Anspruch 1 oder Anspruch 3, **dadurch gekennzeichnet,** daß sie einen Speicher (Backup-RAM) aufweist, der die in den Schritten h') bzw. vi) bekannten veränderbaren Abhängigkeiten speichert.

## Claims

1. Device for adjusting the level of a vehicle with air suspension, which device is designed in such a way that when adjustment is to take place to a new setpoint level N_SETP the following steps relating to a valve arrangement on a respective wheel with level adjustment are carried out:

   a) a valve which lets air out of a pneumatic spring or blows air into it is opened in order to reach the setpoint level starting from the actual level L_ACT;

   b) the adjustment speed v_ST of the level adjustment is measured;

   c) as a function of a predetermined dependence between the adjustment speed and a derivative-action time t_V, the current value of the derivative-action time is determined from the measured adjustment speed and a derivative-action level difference is determined from said current value in accordance with the relationship $\Delta N\_V = t\_V \cdot v\_ST \cdot G$, G being a weighting factor <1, this level difference being the value by which the valve must be closed prematurely before the actual level is reached so that the setpoint level should be obtained despite the overshooting of the air suspension after the valve closes; and

   d) when a switch-off level    N_OFF=N SETP-ΔN_V   in   the   case   of   raising   and N_OFF = N_SETP+△N_V in the case of lowering is reached, the valve is switched off;

   e) after the valve is switched off, a final adjustment speed v_OFF is determined when the valve is switched off;

   f) as soon as the air suspension has come to rest, the final level n_E is measured and is compared with the setpoint level N_SETP;

   g) if the final level lies within a prescribed tolerance range ΔN around the setpoint level, the procedure is terminated, otherwise the following steps follow:

   h) a correction derivative-action time $\Delta t\_V = (N\_SETP - N\_E)/v\_OFF$ is determined from the final adjustment speed v_OFF and the level deviation N_SETP-N_E; and

   h') in the previously known dependence of the derivative-action time t_V on the adjustment speed v_ST, the value of the derivative-action time which is associated with the current value of the adjustment speed is then corrected by the correction derivative-action time Δt_V.

2. Device for adjusting the level of a vehicle with air suspension, which device is designed in such a way that when adjustment is to take place to a new setpoint level N_SETP the following steps relating to a valve arrangement on a respective wheel with level adjustement are carried out:

   a) it is investigated whether the difference D_SETP = N_SETP-N_ACT between the actual level N_ACT and the setpoint level N_SETP is greater in absolute terms than a critical difference D_CRIT, and if this is the case, said device then carries out the following steps b) to e) while otherwise it carries out the step f:

b) a valve which lets air out of a pneumatic spring device or blows air into it is opened, in order to reach the setpoint level starting from the actual level N_ACT;

c) the adjustment speed v_ST of the level adjustment is measured;

d) as a function of a predetermined dependence between the adjustment speed and a derivative-action time t_V, the current value of the derivative-action time is determined from the measured adjustment speed and a derivative-action level difference is determined from said current value in accordance with the relationship $\Delta N\_V = t\_V \cdot v\_ST \cdot G$, G being a weighting factor <1, this level difference being the value by which the valve must be closed prematurely before the actual level is reached so that the setpoint level should be obtained despite the overshooting of the air suspension after the valve closes; and

e) when a switch-off level N_OFF=N_SETP-$\Delta$N_V in the case of raising and N_OFF = N_SETP+$\Delta$N_V in the case of lowering is reached, the valve is switched off;

f) the current value of the valve-opening time, which is to be used to overcome the setpoint difference, is determined from the difference D_SETP from a previously known dependence between the setpoint interval D_SETP and a valve-opening time t_OP, and the valve which is responsible for adjusting the setpoint level is opened for the currently determined valve-opening time t_OP.

3. Device according to Claim 2, characterized in that it is designed in such a way that it carries out the following steps after step ii):

iii) as soon as the air suspension has come to rest after the valve has closed, the final level N_E which has been reached is measured;

iv) the final level is compared with the setpoint level and if the final level lies within a prescribed tolerance $\Delta$N around the setpoint level, the device terminates the adjustment procedure while otherwise it carries out the following steps:

v) an opening time t_REQ = t_OP · (D_SETP/D_ACT) , which would actually be required in order to overcome the setpoint difference D_SETP, is determined from the difference D_ACT = N_E-N_ACT which is achieved between the final level N_E and the original actual level N_ACT, the setpoint difference D_SETP and the opening time t_OP which is used; and

vi) in the previously known dependence, used in step ii), of the opening time t_OP on the setpoint difference D_SETP, the value of t_OP which is associated with the current value of D_SETP is replaced by the value t_REQ.

4. Device according to one of Claims 2 or 3, characterized in that it is designed in such a way that it uses two different values for the critical interval D_CRIT in step i), specifically a smaller value for D_SETP > 0 (raising) and a larger value for D_SETP < 0 (lowering).

5. Device according to one of Claims 2 to 4, characterized in that the device is designed in such a way that if, in step i), it makes the decision to execute steps a) to d), it carries out not only these steps but also steps e) to h') of Claim 1.

6. Device according to Claim 1 or Claim 3, characterized in that it has a memory (Backup RAM), which stores the variable dependences known from steps h') and vi).

**Revendications**

1. Dispositif de régulation de niveau d'un véhicule à suspension pneumatique, ce dispositif étant réalisé pour que si un réglage doit être fait sur un nouveau niveau de consigne N_CONS on exécute les étapes suivantes concernant un dispositif de soupape prévu à chaque roue à régulation de niveau,

a) on ouvre une vanne qui insuffle de l'air dans un ressort pneumatique, pour atteindre un niveau de consigne suffisamment voisin du niveau réel N_REEL,

b) on mesure la vitesse de réglage v_ST avec le réglage de niveau,

c) à partir de la vitesse de réglage mesurée, après une relation connue antérieurement entre la vitesse de réglage et le temps d'attente t_V, on définit la valeur réelle du temps d'attente et que celle-ci, selon la relation $\Delta N\_V = t\_V.v\_ST.G$, dans laquelle G est un coefficient de pondération <1, on définit une différence de niveau d'attente selon lequel la vanne doit être fermée de manière anticipée avant d'atteindre le niveau réel pour arriver au niveau de consigne malgré la sur-oscillation de la suspension pneumatique après la fermeture de la vanne, et

d) une fois atteint un niveau de coupure N_OUV = N_CONS- $\Delta$N_V , pour le soulèvement ou N_OUV = N_CONS+$\Delta$N_V pour l'abaissement on coupe la vanne,

e) après la coupure de la vanne on définit une vitesse de fin de réglage v_OUV lorsque la vanne est coupée,

f) dès que la suspension pneumatique est au repos, on mesure le niveau final n_E et on compare avec le niveau de consigne N_CONS,

g) si le niveau final se situe à l'intérieur d'une tolérance prédéterminée $\Delta N$ autour du niveau de consigne, on termine la procédure ; au cas contraire, on effectue les opérations suivantes :

h) à partir de la vitesse de réglage finale v_OUV et de la déviation de niveau N_CONS-N_E, on définit une durée de correction $\Delta t\_V = (N\_CONS-N\_E)/v\_OUV$ et,

h') dans la relation connue entre le temps d'attente t_V et la vitesse de réglage v_ST, on corrige la valeur du temps d'attente correspondant à la valeur actuelle de la vitesse de réglage selon la durée de correction d'attente $\Delta t\_V$.

2. Dispositif de régulation de niveau d'un véhicule à suspension pneumatique, ce dispositif étant réalisé pour que si un réglage doit se faire sur un nouveau niveau de consigne N_CONS, on effectue les étapes suivantes pour une disposition de soupape sur une roue respective avec régulation de niveau :

a) on examine si la différence $D\_CONS = N\_CONS-N\_REEL$ entre le niveau réel N_REEL et le niveau de consigne N_CONS dépasse en amplitude une différence critique D_CRIT et si cela est le cas, on effectue les étapes suivantes b)-e) alors que dans le cas contraire on effectue l'étape f) :

b) on ouvre une vanne qui permet à l'air d'arriver d'une installation de suspension pneumatique ou d'y pénétrer pour atteindre le niveau de consigne à partir du niveau réel N_REEL ;

c) on mesure la vitesse de réglage v_ST du réglage de niveau,

d) à partir de la vitesse de réglage mesurée, on définit selon une relation connue préalablement entre la vitesse de réglage et un temps d'attente t_V, la valeur réelle du temps d'attente et à partir de celui-ci, selon la relation $\Delta N\_V = t\_V.v\_ST.G$, dans laquelle G est un coefficient de pondération <1, on définit une différence de niveau d'attente selon laquelle la vanne doit être fermée de manière anticipée avant d'atteindre le niveau réel pour que malgré la sur-oscillation de la suspension pneumatique après la fermeture de la vanne, on atteigne le niveau de consigne ; et

e) la vanne est coupée lorsqu'on atteint un niveau de coupure $N\_OUV = N\_CONS-\Delta N\_V$ au levage ou $N\_OUV = N\_CONS + \Delta N\_V$ à l'abaissement,

f) à partir de la différence D_CONS, on utilise une relation connue antérieurement entre la distance de consigne D_CONS et un temps d'ouverture de soupape t_OP de la valeur actuelle de la durée d'ouverture de soupape, avec laquelle on veut vaincre la différence de consigne et la vanne responsable du réglage du niveau de consigne est ouverte pour la durée d'ouverture définie actuellement de la soupape t_OP.

3. Dispositif selon la revendication 2, caractérisé en ce qu'
il est réalisé pour exécuter les étapes suivantes après l'étape ii :

iii) dès que la suspension pneumatique est arrivée au repos après la fermeture de la vanne, on mesure le niveau final atteint N_E,

iv) on compare le niveau final au niveau de consigne et si le niveau final se situe à l'intérieur d'une tolérance prédéterminée $\Delta N$ autour du niveau de consigne, le dispositif termine l'opération de régulation alors que dans le cas contraire, il exécute les étapes suivantes :

v) à partir de la différence obtenue $D\_REEL = N\_E-N\_REEL$, entre le niveau final N_E et le niveau réel d'origine N_REEL, on définit la différence de consigne D_CONS et le temps d'ouverture utilisé t_OP pour définir un temps d'ouverture $t\_REQ = t\_OP.(D\_CONS/D\_REEL)$ qui serait effectivement nécessaire pour vaincre la différence de consigne D_CONS et,

vi) dans l'étape ii), la relation connue, utilisée dans l'étape ii, entre le temps d'ouverture t_OP et la différence de consigne d_CONS, on remplace la valeur actuelle t_OP dépendant de D_CONS par la valeur t_REQ.

4. Dispositif selon l'une des revendications 2 ou 3, caractérisé en ce qu'
il est réalisé pour utiliser deux valeurs critiques pour la distance critique D_CRIT dans l'étape i), à savoir une petite valeur pour D_CONS > 0 (soulèvement) et une valeur plus grande pour D_CONS < 0 (pour l'abaissement).

5. Dispositif selon l'une des revendications 2 à 4, caractérisé en ce qu'
il est réalisé pour que si dans l'étape i), il est décidé d'effectuer des étapes a)...d), on effectue non seulement ces étapes, mais également les étapes e) jusqu'à h') de la revendication 1.

6. Dispositif selon la revendication 1 ou la revendication 3, caractérisé en ce qu'

il comporte une mémoire (mémoire de secours RAM) qui contient les relations variables, connues selon les étapes h') ou vi).

**Fig.1**

Start

Verstellanforderung? n ─ s1

Sollniveau N_SOLL
abspeichern;
Ventil öffnen ─ s2

Verstellgeschwindigkeit
v_ST messen ─ s3

t_V

v_ST ─ s4

$\triangle N\_V = t\_V \cdot v\_ST \cdot 1/2$
$N\_OFF = N\_SOLL \pm \triangle N\_V$
(+=Heben; -=Senken) ─ s5

Istniveau N_IST
messen ─ s6

N_IST ≥ N_OFF (Heben) n
N_IST ≤ N_OFF (Senken) ─ s6'

Ventil schließen
t_A, N_A messen ─ s7

Ruhelage erreicht? n ─ s8

t_E, N_E messen ─ s9

N_E
= N_SOLL ± △N
? n ─ s10

V_OFF
$= (N\_E - N\_A)/(t\_E - t\_A)$ ─ s11

$\triangle t\_V = (N\_SOLL - 1$
$= (N\_SOLL - N\_E)/v\_OFF$
t_V im Diagramm von
Schritt s4 um △t_V
korrigieren ─ s12

Nachregelung ─ s13

Ende

Fig.2

11

# Fig.3

Start

Verstellanforderung? — n
s1

Sollniveau N_SOLL speichern
Istniveau N_IST messen
D_SOLL = N_SOLL - N_IST
s1'

s14
D_SOLL > D_KRIT ?
n

s15
Verstellung mit
Vorhaltezeit, vorteilhafterweise gemäß Fig.2

Ende

s16
D_SOLL > 0 ?
n (Senken)

(Heben)

s17.h
t_OP / D_SOLL

s17.s
t_OP / D SOLL

Ventil für t_OP öffnen — s18

s21
N_E = N_SOLL ± ΔN ?
n

Ruhelage nach Schließen
des Ventils erreicht? — n
s19

s22
D_IST = N_E - N_IST
t_REQ = t_OP · (D_SOLL / D_IST)

Endniveau N_E messen — s20

s23
t_OP in der Abhängigkeit in
s17.h bzw. s17.s auf
t_REQ korrigieren

Nachregelung — s13

Ende